# EUROPEAN PATENT APPLICATION

(11) **EP 4 668 291 A1**
(43) Date of publication of application: **24.12.2025**
(21) Application number: 25183530.2
(22) Date of filing: 18.06.2025
(51) Int. Cl.: H01B 7/282, H01B 7/14

(54) **TRANSVERSAL REINFORCEMENT OF A LEAD-FREE WATER BARRIER FOR A SUBSEA CABLE**

(30) Priority: 21.06.2024 NO 20240678
(71) Applicant: Nexans, 92400 Courbevoie (FR)
(72) Inventor: Olsen, Espen, 1784 Halden (NO)
(74) Representative: Acapo Onsagers AS

(57) **Abstract**

The present invention relates to electrical power cables (1). More specifically, the present invention relates to a water barrier for surrounding a cable core of an electrical power cable (1), wherein the water barrier comprises a first layer of a lead-free metal sheath (4), and a second layer (5) for reinforcing the lead-free metal sheath (4), wherein the second layer surrounds the first layer. Further, the present invention relates to power cables (1) comprising an electrical conductor (2) and the water barrier according to the invention, wherein the water barrier surrounds the electrical conductor (2).

## Description

### FIELD OF THE INVENTION

The present invention relates to electrical power cables. More specifically, the present invention relates to a water barrier for surrounding a cable core of an electrical power cable, wherein the water barrier comprises a first layer of a lead-free metal sheath, and a second layer for reinforcing the lead-free metal sheath, wherein the second layer surrounds the first layer. Further, the present invention relates to power cables comprising an electrical conductor and the water barrier according to the invention, wherein the water barrier surrounds the electrical conductor.

### BACKGROUND

Electric power cables are categorized in different classes. One kind of categorization refers to the voltage applied to the cable. A further important issue relates to the environment where the cable is placed. As such, land cables for example are constructed differently to subsea cables.

The subsea cables applied for different purposes are well known in the art. Such cables are exposed to harsh environments that may cause damage to the cables if they are not sufficiently protected against water ingress and mechanical force or pressure loads. Arranged radially outside a cable core comprising the electrical conductor, there may be provided a metallic sheath for electrically shielding and protecting the conductor from moisture.

The metallic sheath of subsea power cables should provide both excellent water barrier properties blocking out any intrusion of water and/or moisture to the conductor and/or insulation of the one or more conductors and sufficient mechanical endurance/resilience ensuring the water barrier property of the inner sheathing remains intact during the desired lifetime of the cable. The metallic sheath may further, advantageously, be electrically conducting to function as an emergency-earthing conductor of electric charges to ground in case short-circuit currents arises in the cable and/or to carry eventual capacitive charging currents to ground.

It is well known in the art to use a lead-based sheath surrounding the cable core. The lead-based sheath is associated with the beneficial effects of being easily processed during manufacturing of the cable, and further the water barrier properties and durability of the cable are advantageous. However, the use of lead is associated with serious environmental concerns.

As an alternative to lead-based materials, it is known to make the inner sheath from a corrugated copper alloy or corrugated aluminum alloy. A corrugated tubular sheathing cannot be made by extrusion and must instead be welded from a metallic sheet comprising the alloy, to form a continuous water barrier layer around a cable core. A longitudinally welded metal sheath (LWS) is disclosed e.g. in EP 3 786 982 A1.

There is room for improvements of such longitudinally welded metal sheaths of cables. The immanent property of lead relates to its ductility which cannot be similarly mimicked by metal or metal alloys other than those based on lead. Associated with poor ductility compared to lead, the mechanical durability of the water protective arrangements of cables might become insufficient.

It is not solely the ductility, but the dynamic mechanical behavior of metals or metal alloys, which - on the one hand - could be processed in the manufacturing process of the cable, surprisingly shows - on the other hand - cracks in buckling portions of the metal sheath.

Problems solved by the invention relate to the provision of water protection of cables based on materials other than lead which has a high durability and long-lasting water protection properties.

### SUMMARY OF THE INVENTION

The invention's underlying problems are solved by the subject-matter of claim 1. The present invention relates to a water barrier for surrounding a cable core, wherein the water barrier comprises a first layer of a lead-free metal sheath, and a second layer of a wrapped reinforcing layer for reinforcing the lead-free metal sheath, wherein the second layer surrounds the first layer, and wherein the wrapped reinforcing layer is made of a material comprising a carbon fibre material, a reinforced polymer composite material, or a metal.

When seeking improvements of the water barrier sheath, a skilled person's focus may firstly relate to an improvement of the material of the metal or metal alloy sheath or its thickness or arrangement. It has surprisingly been found that a further layer may effectively work as a reinforcing layer. The second layer surrounding the first layer is a lead-free metal sheath.

The term "metal" in the framework of this invention refers to both metal and metal alloy.

The term "lead-free" in the framework of this invention means that the content of lead is below 10 wt.-%, preferably below 2 wt.% based on the total weight of the metal or metal alloy. The metal sheath is supposed to be lead-free because the metal sheath should be made of a metal or metal alloy substituting lead as the material used in the state of the art as water barriers for subsea electric cables.

The term "surrounding" in the framework of this invention means that the respective layer is arranged around the layer underneath. It does not necessarily mean that the layer surrounding the further layer must completely cover the further layer.

The term "sheath" refers to a complete covering the circumference of the inner part for which the sheath is arranged. The lead-free metal sheath causes the water barrier to be effective as water protective to the core of the cable. The wrapped reinforcing layer does not necessarily have a water barrier property, but of course it may also have such a function. It is the first layer effecting the water barrier property. When using a sheath, it works as sheathing the part inside the sheath. The sheathing is meant to be an application of a sheath.

The "cable core" at least comprises the metal conductor and the electric isolating material.

The water barrier has a first layer of a lead-free metal sheath. **In** one aspect, the lead-free metal sheath is a longitudinally welded lead-free metal sheath (LWS) or an extruded lead-free metal sheath.

The first layer guarantees the water tightness. A favorable way of guaranteeing water tightness is by providing a longitudinally welded lead-free metal sheath or an extruded lead-free metal sheath.

It is essential that the second layer is a wrapped reinforcing layer, which distinguishes from reinforcing layers being extruded. It means that the reinforcing material forming the wrapped reinforcing layer is laid around the surface of circumference by way of turns around the circumference. In general, a skilled person knows how to wrap a layer around a cable body.

The "first layer" is an inner layer, and the "second layer" is an outer layer. "Inner layer" means that the layer is arranged towards the center of the cable, "outer layer" means that the layer is arranged towards the outside of the cable. "Inner" and "outer" thus means relative to other layers and relative to the center and the outside of the cable. It is to be distinguished with "innermost" and "outermost", which terms are self-explaining.

The second layer is the wrapped reinforcing layer. In general, the wrapped reinforcing layer must be capable of mechanically reinforcing the lead-free metal sheath. A non-reinforced polymeric tape included in the second layer is not capable of reinforcing the lead-free metal sheath according to the understanding of the present invention. The second layer does not necessarily provide a water barrier property.

It is important to arrange the wrapped reinforcing layer near the first layer. This does, however, not necessarily mean that the second layer must be in contact with the first layer. It might be possible to apply one or more third layers between the first layer and the second layer. In that the wrapped reinforcing layer is near the first layer, it exerts the reinforcing property. While the wrapped reinforcing layer relates to a protection of the lead-free metal sheath, an armouring layer primarily protects an electric cable from any impact or influence from outside the cable.

In one aspect, the wrapped reinforcing layer is a helically wrapped reinforcing layer; or the wrapped reinforcing layer is arranged by sheathing the first layer.

According to this aspect, the material forming the wrapped reinforcing layer is arranged around the first layer or third layer(s) on the first layer such that the material forms a helix, when regarded isolated. The features describing the helix in the framework of this invention are understood as known in the state of the art. It is preferred that the helix is a regular helix. However, the helix may have a variant pitch or may be irregular anyhow else.

In one aspect, the wrapped reinforcing layer is formed by a tape or wire, preferably a tape, being helically wrapped around the first layer. The term "tape" is understood as follows: The width of the cross-section of the tape is larger than the height of the cross-section, preferably the width of the cross-section of the tape is at least 5 to 150 times larger, more preferred 10 to 50 times larger, than the height of the cross-section. A wire could be used; however, the wire does not reinforce the whole area of the first layer. In contrast to a wire, a tape can be applied to the first layer such that it exerts a pressure over whole surface area of the first layer, respectively the third layer(s) on the first layer.

It is preferred that the reinforcing layer is formed by a tape which offers an improved processibility. The aspect ratio, i.e. larger width than height, makes the tape to be a tape.

In one aspect, the tape being helically wrapped around the first layer forms a helix around the first layer, which helix has a pitch being larger than the breadth of the tape measured parallel to the axis of the helix.

The "pitch" of a helix is understood as known by a person skilled in the art, i.e. it is the height of one complete helix turn, measured parallel to the axis of the helix. If the pitch is larger than the breadth of the tape measured parallel to the axis of the helix, i.e. the pitch and the breadth of the helix are measured parallel to one another on the surface where it is wrapped, it follows that a gap appears where the tape does not cover the surface on which the helix is applied. In other words, this preferred embodiment results in a gap between the tape when the tape makes one complete helix turn. This preferred embodiment is associated with the beneficial effect that a bending movement of the electric cable is better supported. The bending of the electric cable does not harm. Thus, it is beneficial for a dynamic cable.

In one aspect, the pitch is between 2 mm to 30 mm, preferably 3 to 20 mm, more preferred 4 to 10 mm, larger than the breadth of the tape measured parallel to the axis of the helix. This corresponds to 2 to 30 mm gap width which gap width is measured parallel to the axis of the helix.

In one aspect, the second layer comprises a first tape helically wrapped around the first layer, which first tape forms a first helix forming a first wrapped reinforcing layer, and a second tape helically wrapped around the first wrapped reinforcing layer, which second tape forms a second helix forming a second wrapped reinforcing layer.

The preferred embodiment where a gap appears in the helically wrapped reinforcing layer is associated with the beneficial effect that a bending movement of the electric cable is better supported. It is however detrimental as the reinforcing effect is not exerted over the whole breadth of the metal sheath. In that a second tape is helically wrapped around the first layer, the gap can be covered with the second helix.

In one aspect, the first wrapped reinforcing layer and the second wrapped reinforcing layer surround the first layer; or wherein the first helix and the second helix have approximately the same pitch, and wherein the second helix is longitudinally displaced relative to the first helix, preferably wherein the second helix is longitudinally displaced relative to the first helix in an amount of 40% to 50% of the pitch. In case a helix is "longitudinal displaced", it means that it is shifted in parallel to the longitudinal axis of the cable.

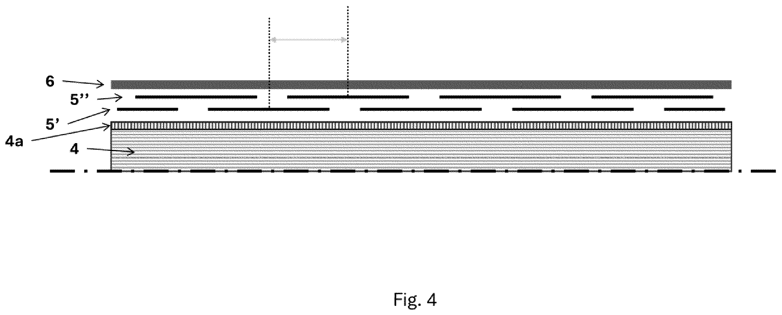

In the first embodiment of this aspect, where the first wrapped reinforcing layer and the second wrapped reinforcing layer surround the first layer, the wrapped reinforcing layers in general cover the whole surface on which the helices are wrapped. The second embodiment of this aspect represents a specific embodiment falling under the first embodiment in which the parallel displacement of the second wrapped reinforcing layer relative to the first wrapped reinforcing layer is quantified. Figure 4 shows this displacement: If the central point of the tape of the first wrapped reinforcing layer is displaced relative to the central point of the tape of the second wrapped reinforcing layer by the pitch length of the helix, the longitudinal displacement amounts to 50%. The displacement aims at a complete coverage of the cable body underneath.

In one aspect, the tape helically wrapped around the first layer forms a helix around the first layer, which helix has a pitch being smaller than the breadth of the tape measured parallel to the axis of the helix.

This embodiment represents a simply manufactured embodiment in which the cable body underneath the wrapped reinforcing layers is completely covered.

In one aspect, the reinforcing layer, particularly the tape, is made of a material comprising a carbon fibre material, a reinforced polymer composite material, or a metal, preferably wherein the tape comprises a metal, more preferred a stainless-steel, copper or a copper based alloy, especially a stainless-steel web. The term "tape" in this aspect of course may have the meaning "first tape" or "second tape". The first tape and the second tape may be made of the same material.

The tape must be made of a material such that the wrapped reinforcing layer is capable of mechanically reinforcing the lead-free metal sheath. For instance, a non-reinforced polymeric tape included in the second layer is not capable of reinforcing the lead-free metal sheath according to the understanding of the present invention. In a preferred embodiment, the wrapped reinforcing layer is not a polymeric tape. However, one exception of a non-reinforced polymeric tape may be made of an aramide. The materials comprising a metal, more preferred a stainless-steel, especially a stainless-steel web may be used for constituting the tape.

In one aspect, the first layer of a lead-free metal sheath is a first layer comprising a copper layer or an alloy layer, wherein the alloy layer comprises at least one of Cu, Ni, Sn or Sb; preferably wherein the first layer of a lead-free metal sheath is a first layer comprising a CuNi alloy or a SnSb alloy, more preferred a CuNi alloy, most preferred a CuNiSi alloy.

According to a preferred embodiment, the lead-free metal sheath consists of a CuNiSi-alloy having a composition of either:
from 0.8 to 30 weight% Ni, from 0.1 to 2 weight% Si, from 0.1 to 1.5 weight% Fe, and from 0.1 to 1.5 weight% Mn, based on the total mass of the alloy, or
from 2.6 to 4.5 weight% Ni, from 0.8 to 1.3 weight% Si, from 0.1 to 1.5 weight% Fe, and from 0.1 to 1.5 weight% Mn, based on the total mass of the alloy, or
from 0.8 to 1.8 weight% Ni, from 0.15 to 0.35 weight% Si, from 0.1 to 1.5 weight% Fe, and from 0.1 to 1.5 weight% Mn, based on the total mass of the alloy, or
of 2.25 weight% Ni, of 0.65 weight% Si, from 0.1 to 1.5 weight% Fe, and from 0.1 to 1.5 weight% Mn, based on the total mass of the alloy, and
the rest being Cu and unavoidable impurities.

In one aspect, the distance between the first layer and the second layer, measured as the shortest gap between the inner surface of the second layer and the outer surface of the first layer, is from 0 mm to 3.5 mm, preferably from 0.01 mm to 3 mm, more preferred from 0.1 mm to 2 mm, most preferred from 0.2 to 1 mm.

As disclosed above, there might be at least one third layer between the first layer and the second layer. If the distance is 0 mm, there is no third layer and thus the inner layer and the outer layer are in direct contact. The smaller the distance, the higher the impact on the reinforcement property exerted to the first layer, i.e. the lead-free metal sheath. It is known that electric cables may be provided with an armouring layer as an outer layer close to the outermost layer. Such armouring layers have a higher distance from the lead-free metal sheath because their purpose relates to the mechanical protection of the cable from an impact outside the cable. The above distances are preferred as the reinforcement property is still present. The distance is measured between the outer surface of the first layer and the inner surface of the second layer. This distance should be equivalent to the thickness of the third layer between the first layer and the second layer.

**In** one aspect, the water barrier comprises a third layer between the first layer and the second layer.

The third layer may improve the adhesion between the first layer and second layer. The third layer may comprise one or more single layers.

In one aspect, the third layer is an extruded third layer or a wrapped third layer, preferably a wrapped third layer.

In one aspect, the third layer comprises a semi-conductive material, preferably wherein the third layer comprises a semi-conductive material based on nylon or polyethylene. In a preferred embodiment, the third layer comprises a layer of nylon and a further layer of extruded polyethylene. The thickness of the third layer(s) is in the above disclosed range of the distance of the first layer and the second layer.

The invention's underlying problems are further solved by the subject-matter of claim 13. The present invention therefore relates to a power cable comprising an electrical conductor and the water barrier according to the invention, wherein the water barrier surrounds the electrical conductor.

The water barrier according to the invention is made for subsea electrical cables, in particular. According to this aspect of the invention, the water barrier surrounds at least the electrical conductor, preferably the electrical conductor and the electric isolating material. In line with the general understanding in the framework of this invention, the term "surrounding" does not necessarily mean that the respective constituents of the cable are in direct contact.

In one aspect, the power cable comprises an armouring layer surrounding the water barrier, wherein preferably the armouring layer surrounding the water barrier comprises one or more layers of steel wires having a diameter of 1 mm to 4 mm, more preferred 2 mm to 3 mm, wherein preferably the steel wires being embedded in a corrosion protecting material; and/or at least one semi-conductive sheath layer between the electrical conductor and the first layer.

In one aspect, the power cable comprises an electrical conductor, an insulating layer, and the water barrier according to the invention, wherein the water barrier surrounds the electrical conductor.

In one aspect, the power cable comprises a semi-conductive sheath layer applied on the electrical conductor, an insulating layer applied on the electrical conductor, a further semi-conductive sheath layer applied on the insulating layer, and the water barrier according to the invention applied on the further semi-conductive sheath layer.

The armouring layer has the function of protecting the electric cable from an impact, preferably a mechanical impact, exerted from outside the cable. Especially, the armouring layer serves for mechanical strength against mechanical stress longitudinal to the cable. Distinguishing from the armouring layer, the wrapped reinforcing layer is primarily not intended to protect the electrical cable from impact exerted from outside the electrical cable. The wrapping of the wrapped reinforcing layer rather does not effect a protection of longitudinal stress.

In one aspect, the power cable comprises one or more layers between the wrapped reinforcing layer and the armouring layer. For example, these one or more layers comprise an adhesive layer, an HDPE sheath, and a nylon layer. In one aspect, the thickness of these one or more layers amounts to more than 3 mm, preferably more than 3.5 mm, more preferred more than 4 mm.

In one aspect the wires may be made of galvanized steel. In a further aspect, the corrosion protecting material may comprise a polymer, preferably bitumen.

It is emphasized that the power cable is not restricted to a 1-core power cable. The water barrier according to the invention may be used in a 3-core power cable as well. In case of a 3-core power cable, the water barrier surrounds each of the three cores.

The invention's underlying problems are further solved by the subject-matter of claim 15. The present invention therefore relates to a method of manufacturing a power cable, wherein the method comprises providing an electrical conductor; wrapping a lead-free metal sheet around the electrical conductor; welding together opposing edges of the lead-free metal sheet to form a watertight lead-free metal sheath; and wrapping a tape or a wire around the lead-free metal sheath to form a wrapped reinforcing layer for reinforcing the lead-free metal sheath, and wherein the wrapped reinforcing layer is made of a material comprising a carbon fibre material, a reinforced polymer composite material, or a metal.

In one aspect, the wrapped reinforcing layer forms a helix.

In one aspect, the power cable is the power cable is a power cable according to the invention.

It is further disclosed herewith the use of a water barrier according to the invention for a high voltage (HV) cable, preferably for a HV subsea cable, more preferred for a HVAC subsea cable or a HVDC subsea cable.

It is further disclosed herewith a cable joint comprising a water barrier layer in accordance with the invention.

Features being solely disclosed in connection with the water barrier of the present invention are deemed to be disclosed in connection with the method of the present invention and vice versa. Further, features being solely disclosed in connection with the water barrier of the present invention are deemed to be disclosed in connection with the power cable of the present invention and vice versa. Even further, features being solely disclosed in connection with the power cable of the present invention are deemed to be disclosed in connection with the method of the invention and vice versa.

### BRIEF DESCRIPTION OF THE DRAWINGS

Certain aspects of the presently disclosed subject-matter will be described with reference to the accompanying drawings, which are representative and schematic in nature and are not to be considered to be limiting in any respect as it relates to the scope of the subject-matter disclosed herein:
Figure 1 depicts the inner part of a state of the art power cable;
Figure 2 depicts an electric cable comprising the water barrier of the invention;
Figure 3 depicts an electric cable comprising the water barrier of the invention and an armouring layer; and
Figure 4 depicts a cross-section of an electric cable along the longitudinal direction.

### DESCRIPTION OF EMBODIMENTS

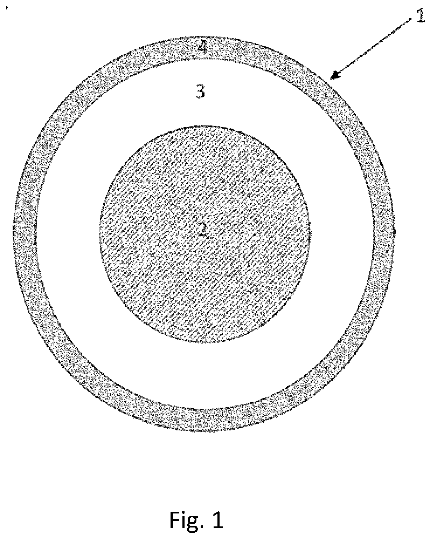

Figure 1 depicts a schematic set-up of a cross section of a state of the art power cable, in which the electrical conductor (2) is the innermost part of the power cable (1). The electric conductor is surrounded by an insulating layer (3). The insulating layer (3) is surrounded by a metal sheath (4), which is in the state of the art made of lead. In the present application, the lead sheath is replaced by a lead-free metal sheath (4).

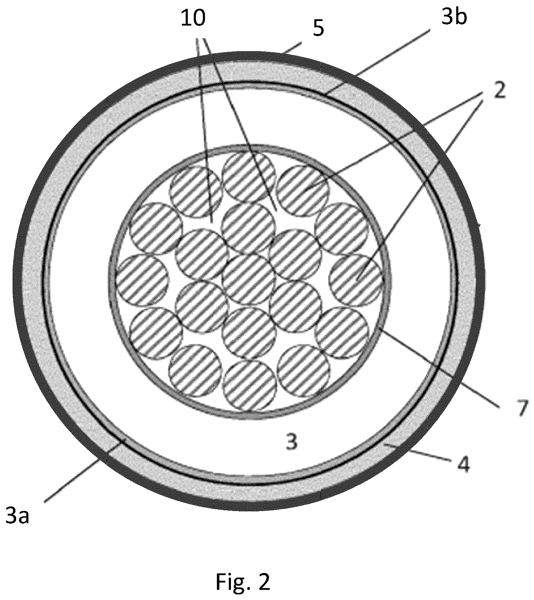

Figure 2 depicts a cross-sectional cut view of a power cable (1) which shows schematically the principal set-up according to the invention. The Figure illustrates a single conductor constituting the cable core. The cable core comprises at its center an electric conductor (2) made in practice of 400 mm² of drawn and stranded wires of electrically conductive pitch (ETP) Cu. Alternatively, the strands of the conductor may be made of AA1370 aluminium alloys or AA6101 aluminium alloy. The electric conductor is impregnated by filling the space between the strands of the conductor with a commercially available water sealant (10), such as e.g. a silicone sealant, to provide longitudinal water blocking.

It is acknowledged that the Figures do not show true scale images of a power cable.

The electric conductor (2) is given a first semi-conductive polyethylene (PE) layer (7) which may have a thickness of 1.5 mm for mitigating electrical stress concentrations around the conductor. Then follows a 16 mm thick layer of cross-linked polyethylene (XLPE) as the insulating layer (3). The XLPE layer is followed by a second semi-conductive PE layer (3a) to mitigate electrical stress concentrations, which layer in practice may have a thickness of 1.5 mm. Then follows 2 layers of swellable tape (3b) wrapped around the second semi-conductive layer (3a) to prevent longitudinal water penetration. Then follows the lead-free metal sheath (4).

The lead-free metal sheath (4) in an exemplary embodiment may have a 0.5 mm thick layer of CuNi1.5Si0.3 -alloy formed by folding a sheet of the CuNi1.5Si0.3 -alloy and made into a seamless tube by laser welding, and then compressed by moving the construction through a die with smaller inner diameter than the CuNi1.5Si0.3 -alloy to a close fit, i.e. obtaining direct contact with the underlying electric insulation.

On top of the lead-free metal sheath, there is provided the wrapped reinforcing layer (5) in line with the present invention. The wrapped reinforcing layer (5) may be made of a stainless-steel material. It is crucial for the invention that the wrapped reinforcing layer is in fact a wrapped layer. The wrapping of the material forming the layer determines the structure of the wrapped reinforcing layer. In the shown exemplary embodiment of Fig. 2, there is no third layer between the lead-free metal layer (4) and the wrapped reinforcing layer (5).

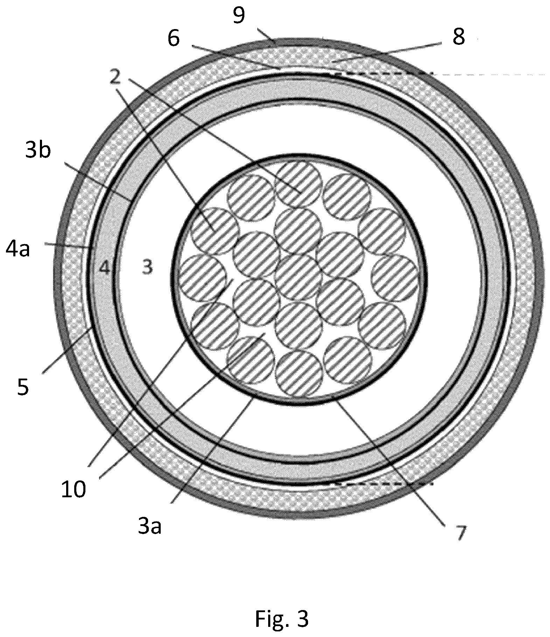

Figure 3 depicts a cross-sectional cut view of a power cable (1) which shows a full power cable. The set-up of the inner part from the cable core to the lead-free metal sheath (4) is the same as in Figure 2. Figure 3 shows on top of the lead-free metal sheath a third layer (4a) which assists as an adhesion promoter. On top of the third layer (4a), there is provided the wrapped reinforcing layer (5). Attached to the wrapped reinforcing layer (5) there is provided a further sheathing layer (6). In practice, this layer may comprise a 0.2 mm thick adhesive layer extruded on layer (5) followed by direct and tandem extrusion of a 3.5 mm thick HDPE sheath being again followed by an over-sheath comprising a 0.2 mm thick layer of a semiconductive anti-friction nylon tape.

On the further sheathing layer (6), there is provided an armouring layer (8) made from a single layer of galvanized steel wires having a diameter of 3.0 mm. The steel wires are embedded in bitumen for corrosion protection, and then a 5.0 mm thick layer of HDPE is applied onto the armouring layer (8) as the outer sheathing layer (9) of the power cable (1).

Figure 4 depicts a part of a longitudinal cross-section of a cable, wherein on a cable core (not shown), a metal sheath (4) is provided. On the metal sheath (4) there is provided a third layer (4a), which is not essential for the invention. Thereon, a first layer (5') and a second layer (5") of wrapped reinforcing layers are shown, which two layers are arranged with a displacement being depicted in Fig. 4 by the arrow between the two dotted lines. On the second wrapped reinforcing layer (5''), there is provided the further sheathing layer.

It is immediately perceivable for a skilled person that the water barrier layer provided with the power cables is associated with an improved mechanical durability of the power cable, especially in case of a dynamic cable.

The following items are disclosed herewith:
1. A water barrier for surrounding a cable core of a power cable (1), wherein the water barrier comprises: a first layer being a lead-free metal sheath (4), and a second layer being a wrapped reinforcing layer (5) for reinforcing the lead-free metal sheath (4), wherein the second layer surrounds the first layer.
2. The water barrier according to item 1, wherein the wrapped reinforcing layer (5) is a helically wrapped reinforcing layer; or the wrapped reinforcing layer (5) is arranged by sheathing the first layer.
3. The water barrier according to item 1, the wrapped reinforcing layer (5) is formed by a tape or wire, preferably a tape, being helically wrapped around the first layer.
4. The water barrier according to item 3, wherein the tape helically wrapped around the first layer forms a helix around the first layer, which helix has a pitch being larger than the breadth of the tape measured parallel to the axis of the helix.
5. The water barrier according to item 4, wherein the pitch being between 2 mm to 30 mm, preferably 3 to 20 mm, more preferred 4 to 10 mm, larger than the breadth of the tape measured parallel to the axis of the helix.
6. The water barrier according to items 2 to 5, wherein the second layer comprises a first tape (5') helically wrapped around the first layer, which first tape forms a first helix forming a first wrapped reinforcing layer (5'), and a second tape helically wrapped around the first wrapped reinforcing layer, which second tape forms a second helix forming a second wrapped reinforcing layer (5'').
7. The water barrier according to item 6, wherein the first wrapped reinforcing layer (5') and the second wrapped reinforcing layer (5") surrounds the first layer; or
   wherein the first helix and the second helix have approximately the same pitch, and wherein the second helix is longitudinally displaced relative to the first helix, preferably wherein the second helix is longitudinally displaced relative to the first helix in an amount of 40% to 50% of the pitch.
8. The water barrier according to items 1 to 3, wherein the tape helically wrapped around the first layer form a helix around the first layer, which helix has a pitch being smaller than the breadth of the tape measured parallel to the axis of the helix.
9. The water barrier according to any one of the preceding items, wherein the reinforcing layer is made of a material comprising a carbon fibre material, a reinforced polymer composite material, or a metal, preferably wherein the reinforcing layer is made of a material comprising a metal, more preferred a stainless-steel, copper or a copper based alloy, especially a stainless-steel web.
10. The water barrier according to any one of the preceding items, wherein the first layer of a lead-free metal sheath (4) is an first layer comprising a copper layer or an alloy layer, wherein the alloy layer comprises at least one of Cu, Ni, Sn or Sb; preferably wherein the first layer of a lead-free metal sheath (4) is an first layer comprising a CuNi alloy or a SnSb alloy, more preferred a CuNi alloy, most preferred a CuNiSi alloy.
11. The water barrier according to any one of the preceding items, wherein the distance between the first layer and the second layer, measured as the shortest gap between a inner surface of the second layer and a outer surface of the first layer, is from 0 mm to 3.5 mm, preferably from 0.01 mm to 3 mm, more preferred from 0.1 mm to 2 mm, most preferred from 0.2 to 1 mm.
12. The water barrier according to any one of the preceding items, wherein the water barrier comprises a third layer (4a) between the first layer and the second layer.
13. The water barrier according to item 12, wherein the third layer (4a) is an extruded third layer or a wrapped third layer, preferably a wrapped third layer.
14. The water barrier according to item 12 or item 13, wherein the third layer (4a) comprises a semi-conductive material, preferably wherein the third layer comprises a semi-conductive material based on nylon or polyethylene.
15. A power cable (1) comprising: an electrical conductor (2); and
   the water barrier according to any one of items 1 to 14, wherein the water barrier surrounds the electrical conductor (2).
16. The power cable according to item 15 further comprising: an armouring layer (8) surrounding the water barrier, wherein preferably the armouring layer (8) surrounding the water barrier comprises one or more layers of steel wires having a diameter of 1 mm to 4 mm, more preferred 2 mm to 3 mm, wherein preferably the steel wires being embedded in a corrosion protecting material; and/or a semi-conductive sheath layer between the electrical conductor and the first layer.
17. A method of manufacturing a power cable (1), wherein the method comprises: providing an electrical conductor (2); wrapping a lead-free metal sheet (4) around the electrical conductor (2); welding together opposing edges of the lead-free metal sheet (4) to form a watertight lead-free metal sheath (4); wrapping a tape or a wire around the lead-free metal sheath (4) to form a wrapped reinforcing layer (5) for reinforcing the lead-free metal sheath (4).

### REFERENCE LIST

- 1: power cable
- 2: electrical conductor
- 3: insulating layer
- 3a: semiconductive polyethylene layer
- 3b: swellable tape
- 4: (lead-free) metal sheath
- 4a: third layer
- 5: wrapped reinforcing layer
- 5': first wrapped reinforcing layer
- 5": second wrapped reinforcing layer
- 6: sheathing layer
- 7: semiconductive polyethylene layer
- 8: armouring layer
- 9: outer sheathing layer
- 10: sealant

## Claims

1. A water barrier for surrounding a cable core of a power cable (1), wherein the water barrier comprises:
- a first layer being a lead-free metal sheath (4), and
- a second layer being a wrapped reinforcing layer (5) for reinforcing the lead-free metal sheath (4),
wherein the second layer surrounds the first layer, and wherein the wrapped reinforcing layer is made of a material comprising a carbon fibre material, a reinforced polymer composite material, or a metal.

2. The water barrier according to claim 1, wherein the wrapped reinforcing layer (5) is a helically wrapped reinforcing layer; and/or the wrapped reinforcing layer (5) is arranged by sheathing the first layer; and/or wrapped reinforcing layer (5) is formed by a tape or wire, preferably a tape, being helically wrapped around the first layer.

3. The water barrier according to claim 2, wherein the tape helically wrapped around the first layer forms a helix around the first layer, which helix has a pitch being larger than the breadth of the tape measured parallel to the axis of the helix.

4. The water barrier according to claim 3, wherein the pitch being between 2 mm to 30 mm, preferably 3 to 20 mm, more preferred 4 to 10 mm, larger than the breadth of the tape measured parallel to the axis of the helix.

5. The water barrier according to claims 2 to 4, wherein the second layer comprises a first tape (5') helically wrapped around the first layer, which first tape forms a first helix forming a first wrapped reinforcing layer (5'), and a second tape helically wrapped around the first wrapped reinforcing layer, which second tape forms a second helix forming a second wrapped reinforcing layer (5'').

6. The water barrier according to claim 5, wherein the first wrapped reinforcing layer (5') and the second wrapped reinforcing layer (5") surrounds the first layer; or
wherein the first helix and the second helix have approximately the same pitch, and wherein the second helix is longitudinally displaced relative to the first helix, preferably wherein the second helix is longitudinally displaced relative to the first helix in an amount of 40% to 50% of the pitch.

7. The water barrier according to claims 1 to 2, wherein the tape helically wrapped around the first layer form a helix around the first layer, which helix has a pitch being smaller than the breadth of the tape measured parallel to the axis of the helix.

8. The water barrier according to any one of the preceding claims, wherein the reinforcing layer is made of the metal being stainless-steel, copper or a copper based alloy, especially a stainless-steel web.

9. The water barrier according to any one of the preceding claims, wherein the first layer of a lead-free metal sheath (4) is an first layer comprising a copper layer or an alloy layer, wherein the alloy layer comprises at least one of Cu, Ni, Sn or Sb; preferably wherein the first layer of a lead-free metal sheath (4) is an first layer comprising a CuNi alloy or a SnSb alloy, more preferred a CuNi alloy, most preferred a CuNiSi alloy.

10. The water barrier according to any one of the preceding claims, wherein the distance between the first layer and the second layer, measured as the shortest gap between a inner surface of the second layer and a outer surface of the first layer, is from 0 mm to 3.5 mm, preferably from 0.01 mm to 3 mm, more preferred from 0.1 mm to 2 mm, most preferred from 0.2 to 1 mm.

11. The water barrier according to any one of the preceding claims, wherein the water barrier comprises a third layer (4a) between the first layer and the second layer.

12. The water barrier according to claim 11, wherein the third layer (4a) is an extruded third layer or a wrapped third layer, preferably a wrapped third layer; and/or wherein the third layer (4a) comprises a semi-conductive material, preferably wherein the third layer comprises a semi-conductive material based on nylon or polyethylene.

13. A power cable (1) comprising:
- an electrical conductor (2); and
- the water barrier according to any one of claims 1 to 12,
wherein the water barrier surrounds the electrical conductor (2).

14. The power cable according to claim 13 further comprising:
- an armouring layer (8) surrounding the water barrier, wherein preferably the armouring layer (8) surrounding the water barrier comprises one or more layers of steel wires having a diameter of 1 mm to 4 mm, more preferred 2 mm to 3 mm, wherein preferably the steel wires being embedded in a corrosion protecting material; and/or
- a semi-conductive sheath layer between the electrical conductor and the first layer.

15. A method of manufacturing a power cable (1), wherein the method comprises:
- providing an electrical conductor (2);
- wrapping a lead-free metal sheet (4) around the electrical conductor (2);
- welding together opposing edges of the lead-free metal sheet (4) to form a watertight lead-free metal sheath (4);
- wrapping a tape or a wire around the lead-free metal sheath (4) to form a wrapped reinforcing layer (5) for reinforcing the lead-free metal sheath (4) , wherein the wrapped reinforcing layer is made of a material comprising a carbon fibre material, a reinforced polymer composite material, or a metal.
